# EUROPEAN PATENT SPECIFICATION

(11) **EP 2 665 149 B1**
(45) Date of publication and mention of the grant of the patent: **21.03.2018**
(21) Application number: 11820836.2
(22) Date of filing: 10.11.2011
(51) Int. Cl.: H02J 3/00, G06Q 50/06

(54) **RESERVE POWER-SUPPLYING CAPACITY TRANSACTION SYSTEM AND RESERVE POWER-SUPPLYING CAPACITY TRANSACTION METHOD**
RESERVESTROM-ZUFUHRKAPAZITÄTS-TRANSAKTIONSSYSTEM UND RESERVESTROM-ZUFUHRKAPAZITÄTS-TRANSAKTIONSVERFAHREN
SYSTÈME DE TRANSACTION DE CAPACITÉ D'ALIMENTATION ÉLECTRIQUE DE SECOURS ET PROCÉDÉ DE TRANSACTION DE CAPACITÉ D'ALIMENTATION ÉLECTRIQUE DE SECOURS

(30) Priority: 11.01.2011 JP 2011002955
(43) Date of publication of application: 20.11.2013
(73) Proprietor: Kabushiki Kaisha Toshiba, Minato-ku Tokyo 105-8001 (JP)
(72) Inventor: MITSUMOTO, Kenji, Tokyo 105-8001 (JP); TAKAGI, Yasuo, Tokyo 105-8001 (JP); NISHIMURA, Nobutaka, Tokyo 105-8001 (JP); MURAYAMA, Dai, Tokyo 105-8001 (JP); IINO, Yutaka, Tokyo 105-8001 (JP); OOBA, Yoshikazu, Tokyo 105-8001 (JP); SAITO, Masaaki, Tokyo 105-8001 (JP)
(74) Representative: Moreland, David
(86) International application number: PCT/JP2011/075908
(87) International publication number: WO 2012/096050

(56) References cited:
- EP-A1- 2 226 754
- JP-A- 2002 176 729
- JP-A- 2002 315 191
- JP-A- 2010 119 269
- JP-A- 2010 119 269
- US-A1- 2003 189 420

## Description

### Technical Field

Embodiments described herein generally relate to a power reserve margin trading system and a power reserve margin trading method.

### Background Art

In recent years, a move to reduce greenhouse gases has been accelerated in not only the manufacturing sector but also the civilian sector, and it has been demanded to further save energy in energy-consuming facilities such as buildings or factories.

Developing countries, however, cannot avoid increase in power consumption with their economic growth, whereas developed countries are also expected to increase power consumption with the spread of electric vehicles and the like.

Moreover, there are clean energy sources, i.e., renewable energy power generation, such as wind power generation, that emits no greenhouse gases in power generation and nuclear power generation that emits only a small amount of greenhouse gases in power generation. These clean energy sources are expected to increase in the future by occupying a larger share in the total power supply.

From a standpoint of the power supply side, one of characteristics of power system is that the power system cannot be stably operated unless a power consumption amount (demand) and a power generation amount (supply) always coincide with each other. In other words, a balance between the supply and demand should always be maintained.

Accordingly, it is necessary to strengthen electric power facilities to cover a peak of power consumption and to secure a larger reserve margin (a reserve margin for supply-demand adjustment). The significance of the reserve margin will be described by using a standby generator as one form of securing the reserve margin.

The standby generator is a generator supposed not to be started up in the first place according to a generator operation plan made based on a predicted value of a power demand. In other words, the standby generator is a generator supposed to generate no power based on the initial plan but to start generation in the case where a generator operating according to the plan has a failure or where the power demand increases beyond the value predicted in the planning, for example. That is, the reserve margin means power (a capacity) to compensate for a power supply shortage if the shortage occurs.

As understood by the role of the standby generator, the reserve margin is essential for stable operation of the power system. Although an entity responsible for securing the reserve margin is different depending on the configuration of the power system, approximately 10% of the power demand (= an amount of supply) is normally secured as the reserve margin. The proportion of the necessary reserve margin is expected to increase in the future along with an increase in the power supply share of wind power generation and the like, which are highly variable in power generation amount.

However, the standby generator is an idle facility because it does not generate power when the supply and demand are balanced in accordance with the generator operation plan. For this reason, there is no strong incentive for power producers to own the standby generator. This tendency may be even more conspicuous in the developing countries where the power consumption increases year by year and the power producer is required to preferentially meet the actual power demand.

Meanwhile, in a power generation plan, generators having high operation efficiency and low generation costs are preferentially operated. Accordingly, an aging generator with low efficiency and low reliability tends to be assigned as the standby generator.

Under these circumstances, it is presumably difficult even in a developed country to secure the standby generators which can cover the increasing reserve margin while satisfying both of the quantity and quality perspectives. Moreover, an environmental load for maintaining the idle facility for stand-by is nonnegligible from a social standpoint.

Another form expected for securing the most economical reserve margin with a low environmental load is to secure a demand response capacity.

The demand response is a scheme of reducing the power demand instead of increasing the power generation amount in order to balance the supply and demand. Securing the capacity to reduce the power demand (the demand response capacity) when needed can contribute as the reserve margin to the stable operation of the power system.

There have been proposed demand response methods such as: (1) a method in which a customer is encouraged to reduce a power demand with an extra charge added to a power price depending on a supply and demand balance, (2) a method in which a power supplier requests a customer to reduce a power demand and the customer responds to the request by stating whether or not to reduce the demand, (3) a method in which a supplier requests a customer to offer a right to stop power consuming equipment for reducing a power demand, and (4) a method in which a customer is provided with a target power consumption amount obtained by subtracting a reduction amount, which is at a fixed ratio of a predicted power consumption amount, from the predicted power consumption amount.

### Citation List

### Patent Literature

PTL 1: JP 2002-369380 A
PTL 2: JP 4131905 B
PTL 3: JP 2010-119269 A
PTL 4: JP 3564605 B

EP 2 226 754 A1 discloses an energy management system which predicts power consumption of users and distributes power accordingly.

### Summary of Invention

### Technical Problem

However, even when the above-described demand response methods are applied, the methods (1) to (3) may fail to secure the reserve margin properly because a power demand amount without any reduction itself is so uncertain that the reduction amount is also uncertain.

On the other hand, in the method (4), a reserve margin trade broker predicts the power demand amount before reduction and calculates the demand amount after reduction. Accordingly, this method can secure a definite reserve margin to some extent. However, it is difficult to enhance prediction accuracy because the power demand amount is predicted by the reserve margin trade broker instead of the customer.

The present invention has been made in view of the above-described circumstances. An object of the present invention is to provide a power reserve margin trading system and a power reserve margin trading method, which are capable of enhancing prediction accuracy of a power demand amount and properly securing a reserve margin.

### Solution to Problem

To attain the object, a power reserve margin trading system according to an embodiment of the present invention is provided according to claim 1. It comprises a reserve margin trading unit, a customer rank determination unit (a determination unit), and a trading consideration distribution unit. The reserve margin trading unit acquires a power reducible amount of a customer, trades the reducible amount as a reserve margin for demand adjustment, and acquires a consideration. The customer rank determination unit (the determination unit) determines a rank of each customer by giving a higher rank to a customer having a smaller difference between a predicted power demand amount and a power consumption amount. The trading consideration distribution unit distributes a consideration to customers in such a manner that a customer having a higher rank receives a larger proportion of the consideration when a power reduction request is not transmitted, and in such a manner that a customer having a higher rank and achieving a larger estimated reduction amount after a reduction request amount is notified in response to a transmitted power reduction request receives a larger proportion of the consideration when the power reduction request is transmitted.

### Brief Description of Drawings

Fig. 1 is a block diagram showing a configuration of a power demand adjustment reserve margin trading system (hereinafter referred to as a trading system) according to a certain embodiment.
Fig. 2 is a flowchart showing an operation of a reserve margin trading broker terminal in the trading system according to the embodiment.
Fig. 3 is an explanatory diagram of a reduction level used when inputting a power reducible amount in the trading system according to the embodiment.
Fig. 4(a) is a graph showing a case of adjusting a predicted power consumption amount in a biased manner by using the trading system according to the embodiment and Fig. 4(b) is a graph showing a case of adjusting the predicted power consumption amount so as to maintain a power consumption amount at the time of issuance of a reduction request by using the trading system according to the embodiment.

### Brief Description of Embodiments

A power demand adjustment reserve margin trading system according to an embodiment of the present invention will be described below. In the following embodiment, a system for trading a power reducible amount in the future is assumed to be constructed in advance and this trading is assumed to be handled by a reserve margin trading broker. In the system, a power reducible amount in the future is indicated by a customer as a demand adjustment reserve margin. The power reducible amount is traded in exchange for a consideration either with a power system operator or through a power market.

### (A configuration of a power reserve margin trading system according to an embodiment)

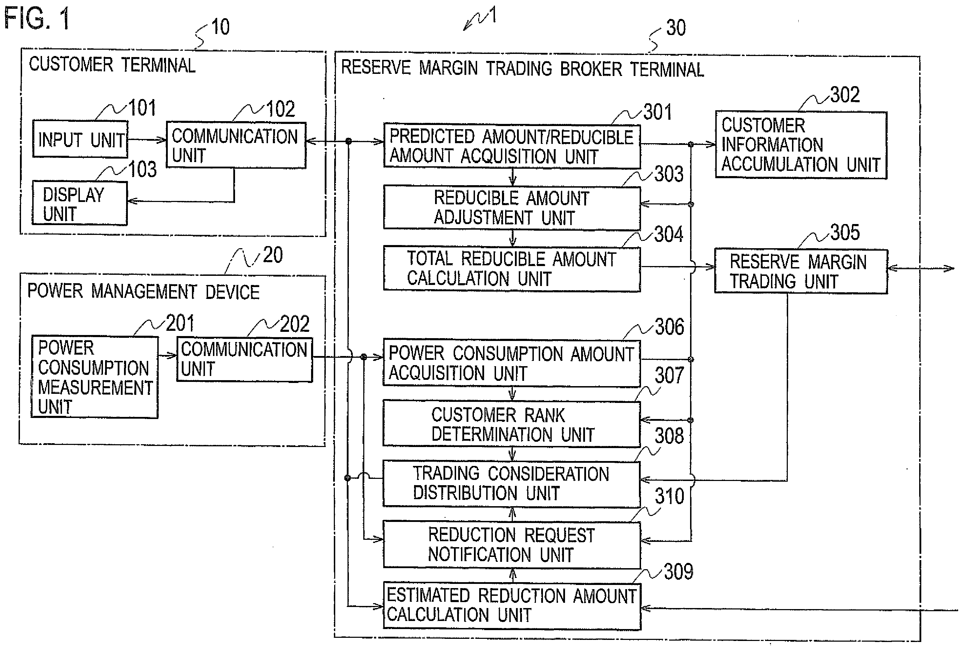

A configuration of a power reserve margin trading system according to an embodiment will be described with reference to Fig. 1.

A power reserve margin trading system 1 according to the present embodiment includes a customer terminal 10 operated by each customer who uses electric power, a power management device 20 configured to manage electric power of each customer in response to the customer terminal, and a reserve margin trading broker terminal (hereinafter referred to as a broker terminal) 30 operated by a broker who trades a power reserve margin. The customer terminal 10 and the power management device 20 are connected to the broker terminal 30. Note that Fig. 1 shows a case of providing one customer terminal 10 and one power management device 20 for the convenience of description. However, there are numerous customer terminals 10 and the power management devices 20 corresponding thereto are actually connected to the reserve margin trading broker terminal 30.

The customer terminal 10 includes an input unit 101 configured to input a predicted power demand amount and a power reducible amount for a predetermined period in the future by an operation of a customer, a communication unit 102 configured to transmit the predicted power demand amount and the power reducible amount inputted by using the input unit 101 to the broker terminal 30, and a display unit 103 configured to display a reduction request amount transmitted from the broker terminal 30.

The power management device 20 includes a power consumption measurement unit 201 configured to measure a power consumption amount used by the customer who operates the customer terminal 10, and a communication unit 202 configured to transmit the power consumption amount measured by the power consumption measurement unit 201 to the broker terminal 30.

The broker terminal 30 includes a predicted amount/reducible amount acquisition unit (hereinafter referred to as a first acquisition unit) 301, a customer information accumulation unit 302, a reducible amount adjustment unit 303, a total reducible amount calculation unit 304, a reserve margin trading unit 305, a power consumption amount acquisition unit (hereinafter referred to as a second acquisition unit) 306, a customer rank determination unit (hereinafter referred to as a determination unit) 307, a trading consideration distribution unit 308, a reduction request notification unit (hereinafter referred to as a notification unit) 309, and an estimated reduction amount calculation unit 310.

The first acquisition unit 301 acquires the predicted power demand amount and the power reducible amount of each customer transmitted from the customer terminal 10.

The customer information accumulation unit 302 accumulates the predicted power demand amount and the power reducible amount acquired by the first acquisition unit 301 and a power consumption amount acquired by the second acquisition unit 306 to be described later.

The reducible amount adjustment unit 303 evaluates, for each customer, the a risk predicted as unable to be reduced out of the acquired power reducible amount, and adjusts the power reducible amount acquired by the first acquisition unit 301 based on this evaluation.

The total reducible amount calculation unit 304 calculates a total value of the power reducible amounts transmitted from the respective customer terminals 10.

The reserve margin trading unit 305 trades the total value of the power reducible amounts calculated by the total reducible amount calculation unit 304 as a demand adjustment reserve margin either with a power system operator or through a power market, and thereby acquires a consideration.

The second acquisition unit 306 acquires the power consumption amount transmitted from the power management device 20.

The determination unit 307 calculates, for each customer, a difference between the predicted power demand amount accumulated in the customer information accumulation unit 302 and the power consumption amount for the corresponding period acquired by the second acquisition unit 306, and determines ranks of the respective customers by giving a higher rank to a customer having a smaller difference as a good customer.

The trading consideration distribution unit 308 distributes the consideration acquired through the trading by the reserve margin trading unit 305 to customers in such a manner that a customer determined as a higher rank by the determination unit 307 receives a larger proportion of the consideration when a power reduction request is not transmitted from a power company. Meanwhile, when the power reduction request is transmitted from the power company, the trading consideration distribution unit 308 distributes the consideration acquired through the trading by the reserve margin trading unit 305 to customers in such a manner that a customer determined as a higher rank by the determination unit 307 and achieving a larger estimated reduction amount calculated by the estimated reduction amount calculation unit 310 to be described later receives a larger portion of the consideration.

The reduction request notification unit 309 determines a power reduction request amount to each customer based on the power reducible amount accumulated in the customer information accumulation unit 302 when the power reduction request is transmitted from the power company, and transmits the power reduction request amount to the customer terminal 10 of each customer as notification.

The estimated reduction amount calculation unit 310 calculates an estimated reduction amount representing an estimated value of a power consumption reduction amount by each customer by using the predicted power demand amount accumulated in the customer information accumulation unit 302 and the power consumption amount after notifying the power reduction request amount from the reduction request notification unit 309 to each customer terminal 10.

### (An operation of the power reserve margin trading system according to the embodiment)

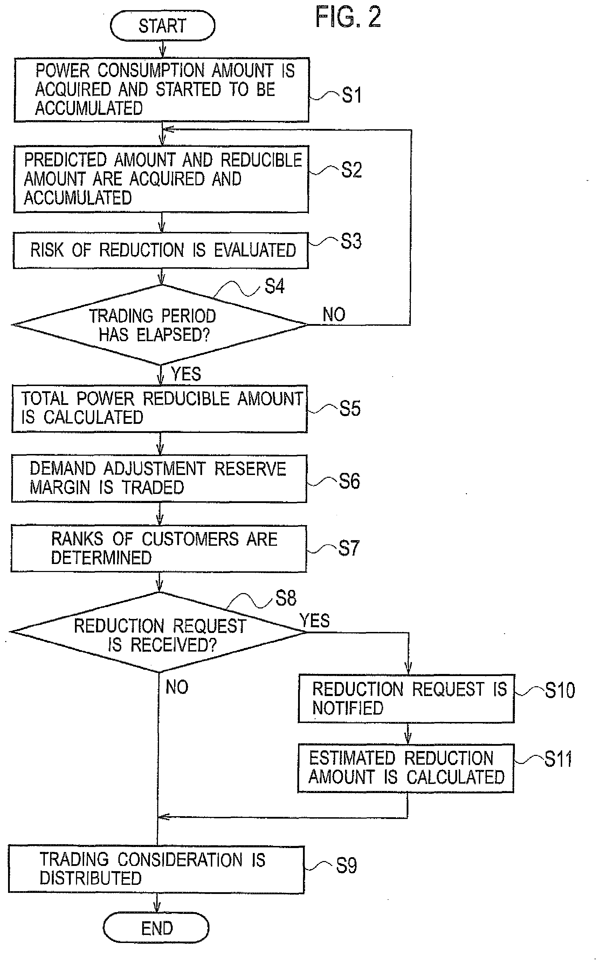

An operation of the power reserve margin trading system (hereinafter referred to as a trading system) 1 according to the present embodiment will now be described. Fig. 2 is a flowchart showing an operation of processing executed by the broker terminal 30 when the trading system 1 is in operation.

When the trading system 1 is operated, a power consumption amount of an equipment load used by the customer terminal 10, which is measured at an interval of a predetermined time period by the power consumption measurement unit 201 of the power management device 20, is transmitted to the broker terminal 30 through the communication unit 202. Then, this power consumption amount is acquired by the second acquisition unit 306 of the broker terminal 30 and accumulated in the customer information accumulation unit 302 (step S1).

Meanwhile, by the operation of the customer using the trading system 1, the predicted power demand amount and the power reducible amount for the predetermined period in the future preset for each customer terminal 10 are inputted to the input unit 101 of each customer terminal 10.

The period for the predicted power demand amount and the power reducible amount inputted is for the next day, for the next week, or for the next month, for example. Meanwhile, the predicted power demand amount and the power reducible amount are inputted as a result of each customer's estimation using data of the power consumption in the past accumulated in the customer terminal 10, for example.

This predicted power demand amount can be inputted by use of an integrated quantity of a predicted power demand amount for one of certain unit periods into which the predetermined period is sub-divided, such as a predicted power demand amount on the hourly basis. Each customer can use a different unit period so that the broad customers who apply a variety of prediction means can use the trading system 1.

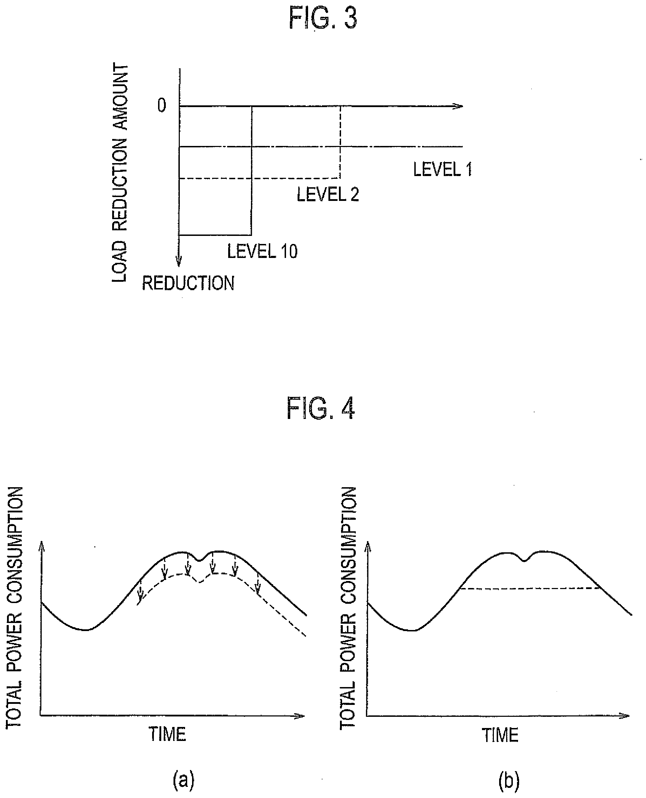

Meanwhile, this power reducible amount may be inputted by designating either or both of a reduction level and power-reducible time information, the reduction level set for each customer in advance by selecting one of reduction levels corresponding to a plurality of power reducible amounts as shown in Fig. 3. By designating these pieces of information, it is possible to easily predict the power reducible amount in conformity to a power consumption pattern of a load used by the customer.

The predicted power demand amount and the power reducible amount inputted to the input unit 101 are transmitted from the transmission unit 102 to the broker terminal 30.

In the broker terminal 30, the predicted power demand amount and the power reducible amount transmitted from the customer terminal 10 are acquired by the first acquisition unit 301 and are accumulated in the customer information accumulation unit 302 (step S2).

Next, the reducible amount adjustment unit 303 evaluates the risk predicted as an amount not reducible in the acquired power reducible amount based on actual amounts of reduction in the past of each customer accumulated in the customer information accumulation unit 302, and adjusts the power reducible amount to a value after removing this risk (step S3).

Alternatively, the reducible amount adjustment unit 303 may perform processing for averaging the power reducible amount in a time direction when the acquired power reducible amount is specified by the reduction level and power-reducible time information.

Next, the total reducible amount calculation unit 304 judges whether or not a preset trading period for trading a predetermined power reserve margin, such as a period of several months or one year has elapsed (step S4). Upon determination that this trading period has elapsed ("YES" in step S4), a total value of the power reducible amounts for the trading period transmitted from the respective customer terminals 10 is calculated (step S5).

Then, the reserve margin trading unit 305 trades the total value of the power reducible amounts calculated by the total reducible amount calculation unit 304 as the demand adjustment reserve margin either with the power system operator or through the power market and thereby acquires the consideration (step S6).

When this trading takes place, the power reserve margin can be adjusted to reduce the predicted power consumption amount indicated with a dotted line in Fig. 4(a) by biasing down a total power consumption amount indicated with a solid line in Fig. 4(a). Alternatively, the reserve margin can be adjusted to reduce the predicted power consumption amount by maintaining it at a level of the power consumption amount at the time of issuance of the reduction request as shown in Fig. 4(b). By adjusting the predicted power consumption amount as described above, it is possible to obtain an effect equivalent to starting a standby generator or an effect to mitigate an increase in the power load to the entire load system in preparation for a time zone where the load reaches the peak. Moreover, by adjusting the power reserve margin as described above, it is possible to deal with a power reduction request unpredictable in when to begin and when to end.

Here, the power consumption amount acquired by the second acquisition unit 306 and accumulated in the customer information accumulation unit 302 is supposed to coincide with a predicted power demand amount that is acquired in advance. However, the power is not consumed as predicted in reality and there is a difference therebetween.

Accordingly, the difference between the predicted power demand amount accumulated in the customer information accumulation unit 302 and the actual power consumption amount in the corresponding period acquired by the second acquisition unit 306 is calculated for each customer, and the ranks of the respective customers are determined in such a manner as to provide a customer having a smaller difference with a higher rank as a good customer (step S7).

Next, the broker terminal 30 judges whether or not the power reduction request from the power company is received during this trading period (step S8).

As a result of the judgment, when the power reduction request is not received ("NO" in step S8), the trading consideration distribution unit 308 distributes the consideration acquired through the trading by the reserve margin trading unit 305 to customers in such a manner that a customer determined as a higher rank by the determination unit 307 receives a larger proportion (step S9).

This consideration is distributed to the relevant customers by return in the form of a power charge, and by granting points or awards eligible for enjoying certain services, for example. Information on the distributed consideration or the estimated reduction amount is transmitted to the customer terminal 10 and is displayed on the display unit 103, thereby being notified to the customer.

On the other hand, when a judgment is made that the power reduction request is received from the power company in step S8 ("YES" in step S8), the reduction request notification unit 309 determines the reduction request amount of each customer based on the power reducible amount accumulated in the customer information accumulation unit 302. The reduction request amount thus determined is transmitted to the customer terminal 10 of each customer as notification (step S10).

The customer terminal 10 of each customer receives the reduction request amount transmitted from the broker terminal 30 through the communication terminal 102 and displays the reduction request amount on the display unit 103. Hence the information is offered to the customer. The customer confirms the information on the reduction request amount displayed thereon and seeks to reduce the power consumption amount.

Next, the estimated reduction amount calculation unit 309 acquires the power reducible amount and the actual power consumption amount during a period when the reduction is executed by the customer from the customer information accumulation unit 302. An estimated reduction amount representing an estimated value of the power consumption reduction amount of each customer is calculated by using this predicted power demand amount and the power consumption amount (step S11).

Here, if a judgment is made that the estimated reduction amount calculated by the estimated reduction amount calculation unit 310 is not enough, then it is also possible to generate an additional reduction request amount and to transmit this information to the customer terminal 10 of each customer.

Meanwhile, if this estimated power reduction amount is different by a prescribed amount or above, or significantly smaller than the reducible amount acquired in advance, for example, then it is also possible to execute processing for downgrading the rank of the customer or for imposing a penalty such as collecting an additional charge from the customer. In this way, it is possible to promote the customer to declare the reducible amount honestly.

Next, the trading consideration distribution unit 308 distributes the consideration acquired as a result of the trading by the reserve margin trading unit 305 in such a manner that the customer determined as the higher rank by the determination unit 307 and achieving a larger estimated reduction amount calculated by the estimated reduction amount calculation unit 310 receives a larger proportion (step S9). The information on the distributed consideration or the estimated reduction amount is transmitted to the customer terminal 10 and is displayed on the display unit 103. Hence the information is notified to the customer.

According to the above-described embodiment, the predicted amounts of power demand are collected from the broad customers who apply a variety of prediction means. Moreover, an incentive for promoting the customer to offer an accurate predicted power demand amount is provided by fairly distributing the consideration accrued by the trading based on the predicted amounts of the power demand. Hence it is possible to secure the reserve margin appropriately.

The above-described embodiment is based on the case where the customer inputs the predicted power demand amount and the power reducible amount by use of the customer terminal 10 so that the broker terminal 30 can acquire these data. However, the present invention is not limited to this configuration. For example, regarding a customer accumulating none of data for estimating the predicted power demand amount or the power reducible amount, it is possible to allow the broker terminal 30 to use any of a constant fixed amount specified in the adhesive terms and conditions or the like, a fixed amount patterned to vary in time-dependent manner, and a calculated amount based on a predetermined formula, as the predicted power demand amount or the power reducible amount. By setting as described above, a smaller building, a standard home or the like who does not manage amounts of power consumption in the past can also use this system as the customer.

Meanwhile, a function for estimating the predicted power demand amount or the power reducible amount for each customer by analyzing the accumulated power consumption amount may be embedded in the broker terminal 30 so as to offer a service to provide the customer with the predicted power demand amount or the power reducible amount by use of this function. By offering this service, it is possible to support a customer who wishes to obtain a higher rank without a lot of work or a customer who has poor skills for prediction.

Meanwhile, the embodiment has described the case where the customer reduces the power consumption amount according to the reduction request notified from the reduction request notification unit 309 of the broker terminal 30. Instead, it is also possible to embed a function for directly controlling power load equipment of the customer on the broker terminal 30 and to adjust operation of the power load equipment of the customer according to the reduction request by using this function. Alternatively, it is also possible to connect power generation equipment, power load equipment, power accumulation equipment, and the like owned by the reserve margin trading broker to the broker terminal 30 and thereby to control the respective equipment so as to be able to reduce the calculated reduction request amount.

Meanwhile, it is also possible to cause the information notified to the customer after execution of the above-described trading of the predicted power demand amount and distribution of the consideration to include information on the estimated reduction amount calculated by the estimated reduction amount calculation unit, and a greenhouse gas reduction amount such as a CO₂ reduction amount calculated by using this reduction amount based on a unit cost of CO₂ of the power as information concerning an environmental load reduction effect. In this way, it is possible to promote an environmental-oriented behavior of the customer and to deal with restriction of carbon dioxide emission rights anticipated in the future.

While certain embodiments have been described, these embodiments have been presented by way of example only, and are not intended to limit the scope of the invention as defined by the scope of the accompanying claims.

## Claims

1. A power reserve margin trading system comprising:
a first acquisition unit configured to acquire a predicted power demand amount and a power reducible amount for a predetermined period in the future for each customer;
a reserve margin trading unit configured to trade the power reducible amount of the customer acquired by the first acquisition unit as a reserve margin for demand adjustment and thereby to acquire a consideration;
a second acquisition unit configured to acquire a power consumption amount for each customer;
a determination unit configured to calculate, for each customer, a difference between the predicted power demand amount acquired by the first acquisition unit and the power consumption amount for the predetermined period acquired by the second acquisition unit, and to determine a rank of each customer by giving a higher rank to a customer having a smaller value of the calculated difference;
a notification unit configured to determine a reduction request amount for each customer based on the power reducible amount acquired by the first acquisition unit and to transmit the reduction request amount to the customer as notification when a power reduction request is sent;
an estimated reduction amount calculation unit configured to calculate, for each customer, an estimated reduction amount being an estimated reduction amount of power consumption by use of the predicted power demand amount acquired by the first acquisition unit and a power consumption amount after the reduction request amount transmission calculated by using the power consumption amount acquired by the second acquisition unit; and
a trading consideration distribution unit configured to distribute a consideration acquired by the reserve margin trading unit into customers in such a manner that a customer determined as a higher rank by the determination unit receives a larger proportion of the consideration when a power reduction request is not transmitted, and in such a manner that a customer determined as a higher rank by the determination unit and achieving a larger estimated reduction amount calculated by the estimated reduction amount calculation unit receives a larger proportion of the consideration when the power reduction request is transmitted.

2. The power reserve margin trading system according to claim 1, wherein
the predicted power demand amount acquired by the first acquisition unit is information inputted by use of an integrated quantity of the predicted power demand amount in one of certain unit periods into which the predetermined period is sub-divided.

3. The power reserve margin trading system according to any one of claims 1 and 2, wherein
the power reducible amount acquired by the first acquisition unit is information inputted by designating either or both of a reduction level and power-reducible time information, the reduction level set for each customer in advance by selecting one of reduction levels corresponding to a plurality of power reducible amounts.

4. The power reserve margin trading system according to any one of claims 1 to 3, wherein
the predicted power demand amount and the power reducible amount acquired by the first acquisition unit are each indicated by using any of a constant fixed amount set for each customer, a fixed amount patterned to vary in time-dependent manner, and a calculated amount based on a predetermined formula.

5. The power reserve margin trading system according to any one of claims 1 to 4, further comprising:
a customer information accumulation unit configured to accumulate the power consumption amounts acquired by the second acquisition unit;
a customer information estimation unit configured to estimate any of the predicted power demand amount and the power reducible amount by analyzing the power consumption amounts accumulated in the customer information accumulation unit.

6. The power reserve margin trading system according to any one of claims 1 to 5, wherein
when the estimated reduction amount calculated for a customer is different from the reducible amount acquired by the first acquisition unit by an amount equal to or above a predetermined value, the estimated reduction amount calculation unit executes any of processing for lowering the rank of the customer and processing for collecting an additional charge.

7. The power reserve margin trading system according to any one of claims 1 to 6, further comprising:
a customer equipment control unit configured to control operation of power load equipment of the customer according to the reduction request amount determined by the notification unit.

8. The power reserve margin trading system according to any one of claims 1 to 7, further comprising:
a display unit configured to display the estimated reduction amount calculated by the estimated reduction amount calculation unit and a greenhouse gas reduction amount calculated by using the estimated reduction amount as notification to the customer.

9. A power reserve margin trading method performed in a power reserve margin trading system, the method comprises:
a predicted amount/reducible amount acquisition step of acquiring a predicted power demand amount and a power reducible amount for a predetermined period in the future for each customer;
a reserve margin trading step of trading the power reducible amount of the customer acquired by the predicted amount/reducible amount acquisition step as a reserve margin for demand adjustment and thereby of acquiring a consideration;
a power consumption amount acquisition step configured to acquire a power consumption amount for each customer;
a customer rank determination step of calculating, for each customer, a difference between the predicted power demand amount acquired in the predicted amount/reducible amount acquisition step and the power consumption amount for the predetermined period calculated by using power consumption value acquired in the power consumption amount acquisition step and of determining a rank of each customer by giving a higher rank to a customer having a smaller value of the calculated difference;
a reduction request notification step of determining a reduction request amount for each customer based on the power reducible amount acquired in the predicted amount/reducible amount acquisition step and of transmitting the reduction request amount to the customer as notification when a power reduction request is sent;
an estimated reduction amount calculation step of calculating, for each customer, an estimated reduction amount being an estimated reduction amount of a power consumption by use of the predicted power demand amount acquired in the predicted amount/reducible amount acquisition step and a power consumption amount after the reduction request amount transmission calculated by using the power consumption amount acquired in the power consumption amount acquisition step; and
a trading consideration distribution step of distributing a consideration acquired in the reserve margin trading step into customers in such a manner that a customer determined as a higher rank in the customer rank determination step receives a larger proportion of the consideration when a power reduction request is not transmitted, and in such a manner that a customer determined as a higher rank in the customer rank determination step and achieving a larger estimated reduction amount calculated in the estimated reduction amount calculation step receives a larger proportion of the consideration when the power reduction request is transmitted.

## Patentansprüche

1. Leistungsreserven-Differenzhandel-System, umfassend:
eine erste Erfassungseinheit, die konfiguriert ist, für jeden Kunden einen vorhergesagten Leistungsbedarfsbetrag und einen leistungsreduzierbaren Betrag für eine vorbestimmte Zeitspanne in der Zukunft zu erfassen;
eine Reserven-Differenzhandel-Einheit, die konfiguriert ist, den durch die erste Erfassungseinheit erfassten leistungsreduzierbaren Betrag des Kunden als eine Reserven-Marge für die Nachfrageanpassung zu handeln und dafür eine Gegenleistung zu erhalten;
eine zweite Erfassungseinheit, die konfiguriert ist, einen Leistungsverbrauchsbetrag für jeden Kunden zu erfassen;
eine Bestimmungseinheit, die konfiguriert ist, für jeden Kunden eine Differenz zwischen dem von der ersten Erfassungseinheit erfassten vorhergesagten Leistungsbedarfsbetrag und dem durch die zweite Erfassungseinheit erfassten Leistungsverbrauchsbetrag für die vorbestimmte Zeitspanne zu berechnen und einen Rang jedes Kunden zu bestimmen, indem einem Kunden, der einen kleineren Wert der berechneten Differenz hat, ein höherer Rang zugewiesen wird;
eine Benachrichtigungseinheit, die konfiguriert ist, einen Reduktionsanforderungsbetrag für jeden Kunden auf der Basis des durch die erste Erfassungseinheit erfassten leistungsreduzierbaren Betrags zu bestimmen und den Reduktionsanforderungsbetrag an den Kunden als Benachrichtigung zu senden, wenn eine Leistungsreduktionsanforderung gesendet wird;
eine Berechnungseinheit für den geschätzte Reduktionsbetrag, die konfiguriert ist, für jeden Kunden einen geschätzten Reduktionsbetrag zu berechnen, der ein geschätzter Reduktionsbetrag des Leistungsverbrauchs ist, unter Verwendung des vorhergesagten Leistungsbedarfsbetrags, der von der ersten Erfassungseinheit erfasst wurde, und eines Leistungsverbrauchsbetrags nach der Reduktionsanforderungsbetrag-Übertragung, der unter Verwendung des von der zweiten Erfassungseinheit erfassten Leistungsverbrauchsbetrags berechnet wurde; und
eine Handelsgegenleistung-Verteilungseinheit, die konfiguriert ist, eine von der Reserven-Marge-Handelseinheit erfasste Gegenleistung derart unter Kunden zu verteilen, dass ein Kunde, der durch die Bestimmungseinheit als Kunde mit höherem Rang bestimmt wurde, einen größeren Anteil der Gegenleistung erhält, wenn keine Leistungsreduktionsanforderung gesendet wird, und derart, dass ein Kunde, der durch die Bestimmungseinheit als Kunde mit höherem Rang bestimmt wurde und der einen größeren geschätzten Reduktionsbetrag erreicht, der durch die Berechnungseinheit für den geschätzten Reduktionsbetrag berechnet wurde, einen größeren Anteil der Gegenleistung erhält, wenn die Leistungsreduktionsanforderung gesendet wird.

2. Leistungsreserven-Differenzhandel-System nach Anspruch 1, wobei
der vorhergesagte Leistungsbedarfsbetrag, der durch die erste Erfassungseinheit erfasst wird, Informationen darstellt, die unter Verwendung einer integrierten Größe des vorhergesagten Leistungsbedarfsbetrags in einer von bestimmten Einheitszeitspannen, in die die vorbestimmte Zeitspanne unterteilt ist, eingegeben werden.

3. Leistungsreserven-Differenzhandel-System nach einem der Ansprüche 1 und 2, wobei
der durch die erste Erfassungseinheit erfasste leistungsreduzierbare Betrag Informationen darstellt, die durch Festlegung von einem oder beiden von Reduktionsstufeninformationen oder leistungsreduzierbaren Zeitinformationen eingegeben werden, wobei die Reduktionsstufe für jeden Kunden im Voraus durch Auswählen einer Reduktionsstufe entsprechend einer Vielzahl von leistungsreduzierbaren Beträgen festgelegt wird.

4. Leistungsreserven-Differenzhandel-System nach einem der Ansprüche 1 bis 3, wobei
der vorhergesagte Leistungsbedarfsbetrag und der durch die erste Erfassungseinheit erfasste leistungsreduzierbare Betrag jeweils unter Verwendung eines für jeden Kunden festgelegten konstanten festen Betrags, eines festen Betrags, der strukturiert ist, zeitabhängig zu variieren, und eines auf Basis einer vorbestimmten Formel berechneten Betrags angegeben werden.

5. Leistungsreserven-Differenzhandel-System nach einem der Ansprüche 1 bis 4, ferner Folgendes umfassend:
eine Kundeninformationen-Kumulierungseinheit, die konfiguriert ist, die von der zweiten Erfassungseinheit erfassten Leistungsverbrauchsbeträge zu akkumulieren;
eine Kundeninformationen-Schätzeinheit, die konfiguriert ist, irgendeinen der vorhergesagten Leistungsbedarfsbeträge und der leistungsreduzierbaren Beträge durch Analysieren der Leistungsverbrauchsbeträge abzuschätzen, die in der Kundeninformationen-Kumulierungseinheit akkumuliert werden.

6. Leistungsreserven-Differenzhandel-System nach einem der Ansprüche 1 bis 5, wobei,
wenn sich der für einen Kunden berechnete geschätzte Reduktionsbetrag von dem von der ersten Erfassungseinheit erfassten reduzierbaren Betrag um einen Betrag gleich oder über einem vorbestimmten Wert unterscheidet, die Berechnungseinheit für den geschätzten Reduktionsbetrag eine beliebige von einer Verarbeitung zum Verringern des Rangs des Kunden und Verarbeitung zum Einziehen einer zusätzlichen Gebühr durchführt.

7. Leistungsreserven-Differenzhandel-System nach einem der Ansprüche 1 bis 6, ferner Folgendes umfassend:
eine Kundenausrüstungssteuereinheit, die konfiguriert ist, den Betrieb der Leistungslastausrüstung des Kunden gemäß dem durch die Benachrichtigungseinheit bestimmten Reduktionsanforderungsbetrag zu steuern.

8. Leistungsreserven-Differenzhandel-System nach einem der Ansprüche 1 bis 7, ferner Folgendes umfassend:
eine Anzeigeeinheit, die konfiguriert ist, um den geschätzten Reduktionsbetrag, der durch die Berechnungseinheit für den geschätzten Reduktionsbetrag berechnet wird, und einen Treibhausgasreduktionsbetrag, der unter Verwendung des geschätzten Reduktionsbetrags berechnet wird, als Benachrichtigung an den Kunden anzuzeigen.

9. Leistungsreserven-Differenzhandel-Verfahren, das in einem Leistungsreserven-Differenzhandel-System durchgeführt wird, wobei das Verfahren Folgendes umfasst:
einen Schritt zur Erfassung eines vorhergesagten Betrags/reduzierbaren Betrags zur Erfassung eines vorhergesagten Leistungsbedarfsbetrags und eines leistungsreduzierbaren Betrags für eine vorbestimmte Zeitspanne in der Zukunft für jeden Kunden;
einen Reserven-Differenzhandel-Schritt zum Handeln des leistungsreduzierbaren Betrags des Kunden, der im Schritt zur Erfassung eines vorhergesagten Betrags/reduzierbaren Betrags erfasst wurde, als eine Reserven-Marge für die Nachfrageanpassung und Erhalten einer Gegenleistung dafür;
einen Leistungsverbrauchbetrag-Erfassungsschritt, der konfiguriert ist, einen Leistungsverbrauchsbetrag für jeden Kunden zu erfassen;
einen Kundenrang-Bestimmungsschritt zum Berechnen für jeden Kunden einer Differenz zwischen dem vorhergesagten Leistungsbedarfsbetrag, der in dem Schritt zur Erfassung eines vorhergesagten Betrags/reduzierbaren Betrags erfasst wurde, und dem Leistungsverbrauchsbetrag für die vorbestimmte Zeitspanne, der unter Verwendung des Leistungsverbrauchswerts, der in dem Leistungsverbrauchbetrag-Erfassungsschritt erfasst wurde, und zum Bestimmen eines Rangs jedes Kunden, indem einem Kunden, der einen kleineren Wert der berechneten Differenz hat, ein höherer Rang zugewiesen wird;
einen Reduktionsanforderung-Benachrichtigungsschritt zum Bestimmen eines Reduktionsanforderungsbetrags für jeden Kunden basierend auf dem leistungsreduzierbaren Betrag, der in dem Schritt zur Erfassung eines vorhergesagten Betrags/reduzierbaren Betrags erfasst wurde, und zum Senden des Reduktionsanforderungsbetrags an den Kunden als Benachrichtigung, wenn eine Leistungsreduktionsanforderung gesendet wird;
einen Berechnungsschritt für den geschätzten Reduktionsbetrag zum Berechnen eines geschätzten Reduktionsbetrags für jeden Kunden, der einen geschätzten Reduktionsbetrag eines Leistungsverbrauchs darstellt, unter Verwendung des vorhergesagten Leistungsbedarfsbetrags, der in dem Schritt zur Erfassung eines vorhergesagten Betrags/reduzierbaren Betrags erfasst wurde, und eines Leistungsverbrauchsbetrags nach der Reduktionsanforderungsbetrag-Übertragung, der unter Verwendung des Energieverbrauchsbetrag, der in dem Leistungsverbrauchbetrag-Erfassungsschritt erfasst wurde, berechnet wurde; und
einen Handelsgegenleistung-Verteilungsschritt zum Verteilen einer im Reserven-Differenzhandel-Schritt erfassten Gegenleistung derart unter Kunden, dass ein Kunde, der im Kundenrang-Bestimmungsschritt als Kunde mit höherem Rang bestimmt wurde, einen größeren Anteil der Gegenleistung erhält, wenn keine Leistungsreduktionsanforderung gesendet wird, und derart, dass ein Kunde, der der im Kundenrang-Bestimmungsschritt als Kunde mit höherem Rang bestimmt wurde und der einen größeren geschätzten Reduktionsbetrag erreicht, der im Berechnungsschritt für den geschätzten Reduktionsbetrag berechnet wurde, einen größeren Anteil der Gegenleistung erhält, wenn die Leistungsreduktionsanforderung gesendet wird.

## Revendications

1. Système de négociation de marge de réserve d'énergie comprenant :
une première unité d'acquisition configurée de manière à acquérir une quantité de demande d'énergie prédite et une quantité réductible d'énergie pour une période prédéterminée dans le futur, pour chaque client ;
une unité de négociation de marge de réserve configurée de manière à négocier la quantité réductible d'énergie du client acquise par la première unité d'acquisition, en tant qu'une marge de réserve pour un ajustement de demande, et par conséquent à acquérir une contrepartie ;
une seconde unité d'acquisition configurée de manière à acquérir une quantité de consommation d'énergie pour chaque client ;
une unité de détermination configurée de manière à calculer, pour chaque client, une différence entre la quantité de demande d'énergie prédite acquise par la première unité d'acquisition et la quantité de consommation d'énergie pour la période prédéterminée, acquise par la seconde unité d'acquisition, et à déterminer un rang de chaque client en attribuant un rang supérieur à un client présentant une valeur moindre de la différence calculée ;
une unité de notification configurée de manière à déterminer une quantité de demande de réduction pour chaque client sur la base de la quantité réductible d'énergie acquise par la première unité d'acquisition, et à transmettre la quantité de demande de réduction au client sous la forme d'une notification, lorsqu'une demande de réduction d'énergie est envoyée ;
une unité de calcul de quantité de réduction estimée configurée de manière à calculer, pour chaque client, une quantité de réduction estimée, laquelle correspond à une quantité de réduction estimée de consommation d'énergie, en utilisant la quantité de demande d'énergie prédite acquise par la première unité d'acquisition et une quantité de consommation d'énergie après la transmission de quantité de demande de réduction calculée en utilisant la quantité de consommation d'énergie acquise par la seconde unité d'acquisition ; et
une unité de distribution de contrepartie de négociation configurée de manière à distribuer une contrepartie acquise par l'unité de négociation de marge de réserve, à des clients, de telle sorte qu'un client déterminé comme étant de rang supérieur par l'unité de détermination reçoit une plus grande proportion de la contrepartie lorsqu'une demande de réduction d'énergie n'est pas transmise, et de telle sorte qu'un client déterminé comme étant de rang supérieur par l'unité de détermination, et atteignant une quantité de réduction estimée plus élevée calculée par l'unité de calcul de quantité de réduction estimée, reçoit une plus grande proportion de la contrepartie lorsque la demande de réduction de puissance est transmise.

2. Système de négociation de marge de réserve d'énergie selon la revendication 1, dans lequel :
la quantité de demande d'énergie prédite acquise par la première unité d'acquisition correspond à des informations entrées en utilisant une quantité intégrée de la quantité de demande d'énergie prédite au cours de l'une parmi certaines périodes unitaires en lesquelles la période prédéterminée est subdivisée.

3. Système de négociation de marge de réserve d'énergie selon l'une quelconque des revendications 1 et 2, dans lequel :
la quantité réductible d'énergie acquise par la première unité d'acquisition correspond à des informations entrées en désignant l'un ou l'autre ou les deux éléments parmi un niveau de réduction et des informations temporelles de quantité réductible d'énergie, le niveau de réduction étant défini à l'avance pour chaque client en sélectionnant l'un parmi des niveaux de réduction correspondant à une pluralité de quantités réductibles d'énergie.

4. Système de négociation de marge de réserve d'énergie selon l'une quelconque des revendications 1 à 3, dans lequel :
la quantité de demande d'énergie prédite et la quantité réductible d'énergie acquises par la première unité d'acquisition sont chacune indiquées en utilisant l'une quelconque parmi une quantité fixe constante définie pour chaque client, une quantité fixe modélisée de manière à varier de façon dépendante du temps, et une quantité calculée sur la base d'une formule prédéterminée.

5. Système de négociation de marge de réserve d'énergie selon l'une quelconque des revendications 1 à 4, comprenant en outre :
une unité d'accumulation d'informations de client configurée de manière à accumuler les quantités de consommation d'énergie acquises par la seconde unité d'acquisition ;
une unité d'estimation d'informations de client configurée de manière à estimer l'une quelconque parmi la quantité de demande d'énergie prédite et la quantité réductible d'énergie en analysant les quantités de consommation d'énergie accumulées dans l'unité d'accumulation d'informations de client.

6. Système de négociation de marge de réserve d'énergie selon l'une quelconque des revendications 1 à 5, dans lequel :
lorsque la quantité de réduction estimée calculée pour un client est différente de la quantité réductible acquise par la première unité d'acquisition, d'une quantité égale ou supérieure à une valeur prédéterminée, l'unité de calcul de quantité de réduction estimée exécute l'un quelconque parmi un traitement destiné à abaisser le rang du client et un traitement destiné à collecter une charge supplémentaire.

7. Système de négociation de marge de réserve d'énergie selon l'une quelconque des revendications 1 à 6, comprenant en outre :
une unité de commande d'équipement de client configurée de manière à commander le fonctionnement d'un équipement de charge d'énergie du client selon la quantité de demande de réduction déterminée par l'unité de notification.

8. Système de négociation de marge de réserve d'énergie selon l'une quelconque des revendications 1 à 7, comprenant en outre :
une unité d'affichage configurée de manière à afficher la quantité de réduction estimée calculée par l'unité de calcul de quantité de réduction estimée et une quantité de réduction de gaz à effet de serre calculée en utilisant la quantité de réduction estimée, sous la forme d'une notification au client.

9. Procédé de négociation de marge de réserve d'énergie mis en oeuvre dans un système de négociation de marge de réserve d'énergie, dans lequel le procédé comprend :
une étape d'acquisition de quantité prédite / quantité réductible consistant à acquérir une quantité de demande d'énergie prédite et une quantité réductible d'énergie pour une période prédéterminée dans le futur, pour chaque client ;
une étape de négociation de marge de réserve consistant à négocier la quantité réductible d'énergie du client, acquise à l'étape d'acquisition de quantité prédite / quantité réductible, en tant qu'une marge de réserve pour un ajustement de demande, et, par conséquent, à acquérir une contrepartie ;
une étape d'acquisition de quantité de consommation d'énergie consistant à acquérir une quantité de consommation d'énergie pour chaque client ;
une étape de détermination de rang de client consistant à calculer, pour chaque client, une différence entre la quantité de demande d'énergie prédite acquise à l'étape d'acquisition de quantité prédite / quantité réductible et la quantité de consommation d'énergie pour la période prédéterminée, calculée en utilisant la valeur de consommation d'énergie acquise à l'étape d'acquisition de quantité de consommation d'énergie, et à déterminer un rang de chaque client, en attribuant un rang plus élevé à un client présentant une valeur moindre de la différence calculée ;
une étape de notification de demande de réduction consistant à déterminer une quantité de demande de réduction pour chaque client, sur la base de la quantité réductible d'énergie acquise à l'étape d'acquisition de quantité prédite / quantité réductible, et à transmettre la quantité de demande de réduction au client, sous la forme d'une notification, lorsqu'une demande de réduction d'énergie est envoyée ;
une étape de calcul de quantité de réduction estimée consistant à calculer, pour chaque client, une quantité de réduction estimée, laquelle correspond à une quantité de réduction estimée de consommation d'énergie, en utilisant la quantité de demande d'énergie prédite acquise à l'étape d'acquisition de quantité prédite / quantité réductible, et une quantité de consommation d'énergie après la transmission de quantité de demande de réduction calculée en utilisant la quantité de consommation d'énergie acquise à l'étape d'acquisition de quantité de consommation d'énergie ; et
une étape de distribution de contrepartie de négociation consistant à distribuer une contrepartie acquise à l'étape de négociation de marge de réserve, à des clients, de telle sorte qu'un client déterminé comme étant de rang supérieur, à l'étape de détermination de rang de client, reçoit une plus grande proportion de la contrepartie lorsqu'une demande de réduction d'énergie n'est pas transmise, et de telle sorte qu'un client déterminé comme étant de rang supérieur, à l'étape de détermination de rang de client, et atteignant une quantité de réduction estimée plus élevée calculée à l'étape de calcul de quantité de réduction estimée, reçoit une plus grande proportion de la contrepartie lorsque la demande de réduction de puissance est transmise.
